(19) Europäisches Patentamt
European Patent Office
Office européen des brevets

(11) EP 1 319 043 B1

(12) **FASCICULE DE BREVET EUROPEEN**

(45) Date de publication et mention de la délivrance du brevet:
**07.06.2006 Bulletin 2006/23**

(21) Numéro de dépôt: **01969875.2**

(22) Date de dépôt: **11.09.2001**

(51) Int Cl.:
***C08L 57/00*** *(2006.01)* ***C08L 53/00*** *(2006.01)*
***C08F 293/00*** *(2006.01)*

(86) Numéro de dépôt international:
**PCT/FR2001/002820**

(87) Numéro de publication internationale:
**WO 2002/022735 (21.03.2002 Gazette 2002/12)**

(54) **LATEX A PROPRIETES DE SURFACE MODIFIEES PAR L'AJOUT D'UN COPOLYMERE HYDROSOLUBLE A CARACTERE AMPHIPHILE**

LATEX MIT MODIFIZIERTEN EIGENSCHAFTEN DURCH ZUGABE EINES WASSERLÖSLICHEN AMPHIPHILEN POLYMERS

LATEX WITH SURFACE PROPERTIES MODIFIED BY ADDITION OF A WATER SOLUBLE COPOLYMER WITH AMPHIPHILIC CHARACTER

(84) Etats contractants désignés:
**AT BE CH CY DE DK ES FI FR GB GR IE IT LI LU MC NL PT SE TR**

(30) Priorité: **18.09.2000 FR 0011875**

(43) Date de publication de la demande:
**18.06.2003 Bulletin 2003/25**

(73) Titulaire: **RHODIA CHIMIE**
**92512 Boulogne Billancourt Cedex (FR)**

(72) Inventeurs:
- **CASTAING, Jean-Christophe**
**F-75019 PARIS (FR)**
- **D'ALLEST, Jean-François**
**F-68100 MULHOUSE (FR)**
- **BETT, William**
**F-75012 PARIS (FR)**

(74) Mandataire: **Andrieu, Isabelle A. J. et al**
**Rhodia Services,**
**Direction Propriété Industrielle**
**40, rue de la Haie-Coq**
**93306 Aubervilliers Cedex (FR)**

(56) Documents cités:
**WO-A-98/58974**
**DE-A- 19 704 714**
**US-A- 5 652 283**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention a pour objet un latex à propriétés de surface modifiées par ajout d'un copolymère hydrosoluble à caractère amphiphile.

Les latex sont des produits bien connus de l'homme de l'art. Ils sont constitués de dispersions aqueuses de polymères insolubles dans l'eau. Ces systèmes fluides contiennent en tant que phase dispersée des particules de polymères constituées de plusieurs chaînes polymères entremêlées dans un milieu aqueux de dispersion. Le diamètre des particules de polymères à l'intérieur de la dispersion peut varier entre 10 et 5 μm. Ces latex trouvent de nombreuses applications, notamment comme additifs dans des formulations pour peintures, pour papier (bains de couchage, papier masse) ou bien dans des formulations destinées à être appliquées dans le domaine du bâtiment (adhésif, colles, enduits de lissage, etc.). Ils confèrent des propriétés importantes à ces formulations grâce, par exemple, à leur pouvoir liant, à leur pouvoir filmogène, et à leur capacité à conférer des propriétés rhéologiques particulières.

De manière générale, pour toutes les applications des latex, on cherche à concilier, une bonne stabilité colloïdale des formules aqueuses avant séchage et de bonnes propriétés mécaniques après séchage.

Un but de la présente invention est de proposer un nouveau latex à propriétés de surface modifiées.

Ce but et d'autres qui apparaîtront à la lecture de la description sont atteints par la présente invention qui a pour objet un latex à propriétés de surface modifiées susceptible d'être obtenu par un procédé qui comprend l'addition d'un copolymère amphiphile hydrosoluble dans une dispersion aqueuse d'un polymère ou copolymère insoluble dans l'eau obtenu à partir de monomères à insaturations éthyléniques

Ces latex présentent une stabilité colloïdale en formulation améliorée. Ils sont en particulier destinés à être utilisés comme liants dans diverses applications dans les domaines de la peinture, du couchage papetier, des revêtements et des matériaux de construction.

Dans le cadre de la présente invention, on entend par "copolymère hydrosoluble" un copolymère qui forme spontanément lorsqu'il est mis en contact avec de l'eau une solution qui tend à s'homogénéiser. Si le mélange est laissé plusieurs jours sous légère agitation, tout prélèvement dans un endroit quelconque du volume occupé par l'échantillon conduit à la même valeur de concentration que la valeur moyenne de concentration. Dans cette définition, on inclut non seulement les copolymères totalement solubles mais aussi les copolymères qui forment une solution homogène présentant une légère turbidité due à des agrégations locales du copolymère.

On appelle "copolymère amphiphile" un copolymère obtenu par polymérisation de monomères hydrophiles et de monomères hydrophobes, ce copolymère comprend des segments hydrophobes et des segments hydrophiles, et, de ce fait présente des zones de solubilité dans l'eau différentes.

Selon un premier mode de réalisation, le copolymère amphiphile hydrosoluble est un polymère statistique obtenu par copolymérisation de monomères hydrophiles et de monomères hydrophobes. Un tel copolymère comprend de façon aléatoire des motifs hydrophiles et des motifs hydrophobes, le nombre de motifs hydrophiles étant supérieur au nombre de motifs hydrophobes. Selon un mode de réalisation particulier, le copolymère amphiphile est obtenu par polymérisation de monomères hydrophobes pour former des motifs hydrophobes qui sont ensuite hydrolysés au moins partiellement pour former des motifs hydrophiles. Selon un mode de réalisation différent, le copolymère amphiphile est obtenu à partir de monomères hydrophobes et de monomères hydrophiles, les motifs hydrophiles obtenus pouvant ensuite être hydrolysés pour former d'autres motifs hydrophiles.

Selon un second mode de réalisation, le copolymère amphiphile hydrosoluble est un copolymère à blocs qui contient au moins un bloc à caractère hydrophile et un bloc à caractère hydrophobe.

Dans la description qui suit, on entend par bloc à caractère hydrophile, un bloc polymère soluble dans l'eau, comprenant des motifs hydrophiles dans une proportion supérieure à 25 % en poids par rapport au nombre de moles total de motifs dans le bloc à caractère hydrophile, et des motifs hydrophobes représentant de préférence moins de 20 % en poids. Par motif, on entend la partie du bloc correspondant à une unité monomère. Selon un mode de réalisation particulier, le bloc à caractère hydrophile comprend uniquement des motifs hydrophiles.

De même, par bloc à caractère hydrophobe, on entend un bloc polymère non soluble dans l'eau comprenant majoritairement des motifs hydrophobes (au moins 50% en poids de motifs hydrophobes par rapport au poids de motifs du bloc à caractère hydrophobe), et des motifs hydrophiles représentant de préférence moins de 20 % en poids du bloc. Selon un mode de réalisation particulier, le bloc à caractère hydrophobe comprend uniquement des motifs hydrophobes.

Selon une première variante, le copolymère amphiphile hydrosoluble contenant un bloc à caractère hydrophile et un bloc à caractère hydrophobe est obtenu par polymérisation de monomères hydrophobes et de monomères hydrophiles. La teneur de motifs hydrophiles et hydrophobes dans chacun des blocs est fonction de la teneur en monomères hydrophiles et hydrophobes lors de la polymérisation et de la séquence d'addition de ces monomères.

Selon une deuxième variante, le copolymère amphiphile hydrosoluble à blocs est obtenu par polymérisation de monomères hydrophobes pouvant être rendus hydrophiles par hydrolyse, et éventuellement de monomères hydrophobes résistants aux conditions d'hydrolyse des autres monomères et/ou de monomères hydrophiles. Dans un deuxième temps, on hydrolyse le polymère obtenu pour obtenir le copolymère à blocs hydrosoluble amphiphile. Au cours de

l'hydrolyse, les motifs hydrophobes correspondant aux monomères hydrolysables sont transformés en motifs hydrophiles. Par introduction appropriée des monomères dans le milieu de polymérisation, on obtient un copolymère contenant, après hydrolyse, un bloc à caractère hydrophile et un bloc à caractère hydrophobe. Les quantités de motifs hydrophiles et hydrophobes dans chacun desdits blocs sont alors contrôlées par la quantité de chaque type de monomères et par le taux d'hydrolyse. On peut aussi envisager la formation d'un copolymère amphiphile hydrosoluble à partir de monomères hydrophobes et de monomères hydrophiles, les motifs hydrophiles ainsi obtenus pouvant être hydrolysés en d'autres motifs hydrophiles.

Selon cette deuxième variante, le copolymère amphiphile hydrosoluble contenant un bloc à caractère hydrophile et un bloc à caractère hydrophobe peut être obtenu par homopolymérisation de monomères hydrophobes pouvant être rendus hydrophiles par hydrolyse. La copolymérisation est alors suivie de l'hydrolyse partielle de l'homopolymère obtenu. Le copolymère amphiphile hydrosoluble contenant un bloc à caractère hydrophile et un bloc à caractère hydrophobe peut aussi être obtenu par copolymérisation de monomères hydrophobes pouvant être rendus hydrophiles par hydrolyse et de monomères hydrophobes ne pouvant pas être rendus hydrophiles par hydrolyse, la copolymérisation étant suivie de l'hydrolyse totale ou partielle du polymère obtenu. Selon ce mode de réalisation, la quantité de motifs hydrophiles et hydrophobes dépend de deux critères : les teneurs des différents types de monomères et le taux d'hydrolyse. Si l'hydrolyse est totale, il suffit de jouer sur la teneur en monomères. Si l'hydrolyse est partielle, on peut jouer à la fois sur la teneur en monomères et le taux d'hydrolyse. Selon un mode de réalisation différent, les blocs peuvent être obtenus par copolymérisation de monomères hydrophobes pouvant être rendus hydrophiles par hydrolyse et de monomères hydrophiles, suivi de l'hydrolyse partielle du polymère obtenu.

Dans tous les modes de réalisation précédents, le taux d'hydrolyse et la teneur en motifs hydrophiles et hydrophobes dans chacun des blocs sont définis pour obtenir un copolymère amphiphile hydrosoluble contenant un bloc à caractère hydrophile et un bloc à caractère hydrophobe tel que défini précédemment, en particulier en ce qui concerne la présence de motifs hydrophiles dans le bloc à caractère hydrophobe et la présence de motifs hydrophobes dans le bloc à caractère hydrophile.

Les monomères hydrophobes utiles pour la présente invention peuvent être choisis parmi :

- les monomères vinylaromatiques tel que le styrène, et les dérivés du styrène tels que l'alpha méthylstyrène ou le vinyltoluène,
- les monomères éthyléniques tels que l'éthylène, alpha-oléfines, chlorure de vinyle
- les diéniques tels que le butadiène, l'isoprène
- les acrylates et méthacrylates d'alkyle dont le groupe alkyle contient de 1 à 10 atomes de carbone tels que les acrylates et méthacrylates de méthyle, éthyle, n-butyle, 2-éthylhexyle, t-butyle, isobomyle, phényle, benzyle et monomères fluorés
- les monomères vinyliques tels que l'acétate de vinyle, le versatate de vinyle et les nitriles, plus particulièrement ceux comprenant de 3 à 12 atomes de carbone, comme l'acrylonitrile et le méthacrylonitrile.

De préférence, le monomère hydrophobe est le styrène ou un dérivé du styrène.

Les monomères hydrophiles utiles pour la présente invention peuvent être choisis parmi:

- les acides carboxyliques à insaturation éthylénique tels que les acides acryliques et méthacryliques,
- les monomères hydrophiles neutres tels que l'acrylamide et ses dérivés (n-méthylacrylamide, n-isopropylacrylamide), le méthacrylamide, le méthacrylate et l'acrylate de polyéthylène glycol, l'hydroxyéthyle méthacrylate, l'hydroxyéthyle acrylate,
- les monomères hydrophiles anioniques : le 2-acrylamido-2-méthyl-propane sulfonate de sodium (AMPS), le styrène sulfonate de sodium, le vinylsulfonate de sodium, l'acide vinyle phosphonique, les esters (meth)acryliques de l'acide phosphorique.
- les alcools vinyliques.

Les monomères hydrophobes pouvant être rendus hydrophiles par hydrolyse ou les monomères hydrophiles pouvant être transformés en autres monomères hydrophiles par hydrolyse peuvent être choisis parmi :

- les acrylates et méthacrylates hydrolysables en acide tels que l'acrylate de méthyle, l'acrylate d'éthyle, le tertiobutyle acrylate,
- l'acétate de vinyle hydrolysable en unités alcool vinylique,
- le méthacrylate et l'acrylate de 2-dimethylaminoéthyle quatemisé (madamquat et adamquat),
- l'acrylamide et le (méth)acrylamide.

Selon un mode de réalisation particulier, les copolymères amphiphiles hydrosolubles selon l'invention sont des

copolymères diblocs constitués d'un bloc à caractère hydrophile et d'un bloc à caractère hydrophobe. Toutefois, il peut également s'agir de copolymères triblocs, voire multiblocs. Si le copolymère comprend trois blocs, il est préférable d'avoir la répartition suivante des blocs : hydrophile-hydrophobe-hydrophile.

Selon le mode de réalisation préféré de l'invention, le copolymère amphiphile hydrosoluble est un copolymère dibloc comprenant un bloc de nature majoritairement hydrophile et un bloc de nature majoritairement hydrophobe, dans lequel le bloc de nature majoritairement hydrophile comprend au moins 80 % en poids de motifs acide acrylique (AA) et/ou d'acide méthacrylique (AMA) par rapport au poids total du bloc hydrophile et le bloc de nature majoritairement hydrophobe comprend au moins 80 % en poids de motifs de styrène (St) par rapport au poids total du bloc hydrophobe.

Le bloc de nature majoritairement hydrophile peut comprendre en plus des motifs (AA), et/ou (AMA), des motifs hydrophobes tels que l'acrylate d'éthyle (AEt). Le bloc de nature majoritairement hydrophobe peut comprendre en plus des motifs de styrène (St), des motifs hydrophiles tels que des motifs obtenus à partir d'acide méthacrylique (AMA) et/ou d'hydroxyéthyl méthacrylate (HEMA).

Selon un mode de réalisation particulier, le bloc de nature majoritairement hydrophile est issu :

- de la polymérisation d'acide acrylique (AA) et d'acrylate d'éthyle (AEt) dans un rapport en poids AEt/AA de 95/5,
- puis de l'hydrolyse du polymère obtenu à un taux d'au moins 80 % en mole.

De préférence, le bloc de nature majoritairement hydrophobe est issu de la polymérisation d'un mélange de monomères comprenant au moins 80 % en poids de styrène.

Selon l'invention, les copolymères amphiphiles hydrosolubles à blocs présentent une masse moléculaire variant entre 10000 et 30000 g/mol. Ces masses molaires sont mesurées par chromatographie d'exclusion stérique dans le THF, en utilisant le polystyrène comme étalon.

Selon un mode de réalisation préféré, le copolymère à blocs utile dans le cadre de l'invention est un copolymère non tensio-actif. Dans le cadre de l'invention, un copolymère est non tensio-actif s'il a une influence faible sur la tension de surface eau/air, à savoir qu'une solution de copolymère à 1% dans l'eau conduit à une tension de surface eau/air supérieure à 60 mN/m, pour une mesure faite 1 heure ou moins après le mélange, alors que dans les mêmes conditions des tensioactifs conventionnels présentent une tension de surface eau/air à l'équilibre de l'ordre de 30-35 mN/m.

Selon ce mode de réalisation, on peut obtenir un copolymère non tensio-actif par le choix des monomères, par exemple le copolymère (AA)/St est non tensio-actif. On peut aussi obtenir un copolymère à blocs non tensioactif en augmentant la masse moléculaire ou en diminuant la fraction de monomères hydrophobes dans le copolymère.

D'une manière générale, les copolymères amphiphiles hydrosolubles à blocs précédents décrits peuvent être obtenus par tout procédé de polymérisation dite vivante ou contrôlée tel que, par exemple :

- la polymérisation radicalaire contrôlée par les xanthates selon l'enseignement de la demande WO 98/58974,
- la polymérisation radicalaire contrôlée par les dithioesters selon l'enseignement de la demande WO 97/01478
- la polymérisation à l'aide de précurseurs nitroxydes selon l'enseignement de la demande WO 99/03894,
- la polymérisation radicalaire contrôlée par les dithiocarbamates selon l'enseignement de la demande WO 99/31144,
- la polymérisation radicalaire par transfert d'atome (ATRP) selon l'enseignement de la demande WO 96/30421,
- la polymérisation radicalaire contrôlée par les iniferters selon l'enseignement de Otu et al., Makromol. Chem. Rapid. Commun., 3, 127 (1982),
- la polymérisation radicalaire contrôlée par transfert dégénératif d'iode selon l'enseignement de Tatemoto et al., Jap. 50, 127, 991 (1975), Daikin Kogyo Co ltd Japan et Matyjaszewski et al., Macromolecules, 28, 2093 (1995)),
- la polymérisation par transfert de groupe selon l'enseignement de Webster O.W. "Group Transfer Polymerization", p. 580-588 de l'Encyclopedia of Polymer Science and Engineering", vol.7 et H.F. Mark, N.M. Bikales, C.G. Overberger and G. Menges, Eds., Wiley Interscience, New York, 1987,
- la polymérisation radicalaire contrôlée par les dérivés du tetraphényléthane (D. Braun et al. Macromol.Symp. 111,63 (1996)),
- la polymérisation radicalaire contrôlée par les complexes organocobalt (Wayland et al. J.Am.Chem.Soc. 116,7973 (1994)).

Selon un mode de réalisation préféré, le copolymère amphiphile hydrosoluble à blocs de l'invention est préparé par polymérisation radicalaire vivante à l'aide de dithioesters, thioéthers-thiones, dithiocarbamates ou xanthates. Ce procédé de polymérisation radicalaire vivante consiste à mettre en contact au moins un monomère éthyléniquement insaturé, au moins une source de radicaux libres, et un composé dithioesters, thioethers-thiones, dithiocarbamates ou xanthates, et à initier la polymérisation par voie thermique.

Pour obtenir des copolymères amphiphiles hydrosolubles à blocs hydrophiles et hydrophobes, ce procédé consiste à former un premier bloc selon les étapes suivantes :

1• mettre en contact :

- au moins un monomère éthyléniquement insaturé,
- au moins une source de radicaux libres, et
- au moins un composé de formule (I) :

$$S{=}C\ (Z^{11}(R^{11})_X)\ -\ S-\ R^{12} \qquad (I)$$

dans laquelle :

- $Z^{11}$ représente C, N, O, S ou P,
- $R^{11}$ et $R^{12}$, identiques ou différents, représentent :
  - un groupe (i) alkyle, acyle, aryle, alcène ou alcyne, éventuellement substitué,
  - un cycle (ii) carboné, saturé ou non, ou aromatique, éventuellement substitué, . un hétérocycle (iii), saturé ou non, ou aromatique, éventuellement substitué,
- x correspond à la valence de $Z^{11}$ ou x vaut 0 et dans ce cas, $Z^{11}$ est $R^{11}$.

2• former un deuxième bloc en reproduisant l'étape 1 à partir :

- des monomères de nature différentes, et
- à la place du composé précurseur de formule (I), le polymère issu de l'étape 1, et

3• éventuellement, hydrolyser au moins partiellement le copolymère obtenu.

Au cours de l'étape 1, un premier bloc du polymère est synthétisé de nature majoritairement hydrophile ou hydrophobe selon la nature et la quantité des monomères utilisés. Au cours de l'étape 2, l'autre bloc du polymère est synthétisé.

Les monomères éthyléniquement insaturés seront choisis parmi les monomères hydrophiles, hydrophobes et hydrolysables précédemment définis dans les proportions adaptées pour obtenir un copolymère à blocs dont les blocs présentent les caractéristiques définies précédemment.

Selon ce procédé, si toutes les polymérisations successives sont réalisées dans le même réacteur, il est généralement préférable que tous les monomères utilisés lors d'une étape aient été consommés avant que la polymérisation de l'étape suivante ne commence, donc avant que les nouveaux monomères ne soient introduits. Toutefois, il peut arriver que les monomères hydrophobes ou hydrophiles de l'étape précédente soient encore présents dans le réacteur lors de la polymérisation du bloc suivant. Dans ce cas, ces monomères ne représentent généralement pas plus de 5 % en mole de tous les monomères et ils participent à la polymérisation en contribuant à introduire des motifs hydrophobes ou hydrophiles dans le bloc suivant.

Un copolymère amphiphile hydrosoluble à blocs à caractère hydrophile et à caractère hydrophobe peut être obtenu à partir d'un seul type de monomères hydrophobes hydrolysables. Dans ce cas, l'étape 2 n'est plus nécessaire, mais l'hydrolyse partielle du polymère est alors indispensable.

Par le même procédé, on peut obtenir un copolymère à n blocs en répétant les étapes 1 et 2 précédemment mais en remplaçant le composé de formule (I) par le copolymère à n-1 blocs.

Pour plus de détails quant au procédé de polymérisation précédent, on peut se reporter au contenu de la demande WO 98/58974.

Par la mise en oeuvre de ce procédé, on obtient un copolymère amphiphile hydrosoluble qui correspond à la formule suivante :

$$S{=}C\ (Z^{11}(R^{11})_x)\ -\ S-\ [A]\ -\ R^{12} \qquad (I)$$

dans laquelle :

- $Z^{11}$ représente C, N, O, S ou P,
- $R^{11}$ et $R^{12}$, identiques ou différents, représentent :
  - un groupe (i) alkyle, acyle, aryle, alcène ou alcyne éventuellement substitué, ou

  - un cycle (ii) carboné, saturé ou non, éventuellement substitué ou aromatique, ou
  un hétérocycle (iii), saturé ou non, éventuellement substitué,

- x correspond à la valence de $Z^{11}$ ou x vaut 0 et dans ce cas, $Z^{11}$ est $R^{11}$.
- A représente une chaîne polymère comprenant un bloc à caractère hydrophile et un bloc à caractère hydrophobe.

Selon une variante avantageuse de l'invention, le composé de formule (I) est tel que $Z^{11}$ est un atome d'oxygène. De tels composés sont fonctionnalisés en bout de chaîne par des xanthates.

Selon un deuxième mode de réalisation de l'invention, on utilise, en tant que copolymère amphiphile hydrosoluble un copolymère correspondant aux formules suivantes :

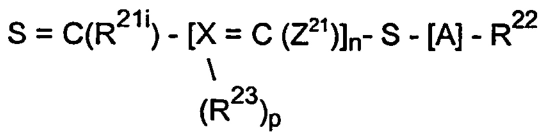

(IIa-p)

et/ou :

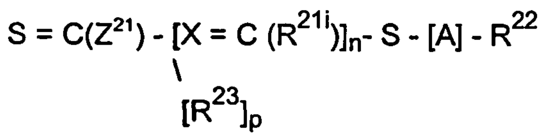

(IIb-p)

formules dans lesquelles :

- X représente un atome choisi parmi N, C, P ou Si,
- $R^{22}$ représente :
  - un groupe (i) alkyle, acyle, aryle, alcène ou alcyne éventuellement substitué,
  - un cycle (ii) carboné, saturé ou non, ou aromatique, éventuellement substitué,
  - un hétérocycle (iii), saturé ou non, ou aromatique, éventuellement substitué,
- $Z^{21}$, $R^{21i}$, $R^{23}$, identiques ou différents, sont choisis parmi :
  - un atome d'hydrogène,
  - un groupe alkyle, acyle, aryle, alcène ou alcyne éventuellement substitué,
  - un cycle carboné saturé ou non, ou aromatique éventuellement substitué,
  - un hétérocycle saturé ou non, éventuellement substitué,
  - des groupes alkoxycarbonyl ou aryloxycarbonyl (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, allyle, époxy, alkoxy (-OR), S-alkyle, S-aryle, organosilyle, R représentant un groupe alkyle ou aryle,
  - des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),
- $n > 0$,
- i varie de 1 à n,
- p égale 0, 1 ou 2 selon la valence de X

de plus,

- si X = C, alors $Z^{21}$ n'est pas un groupe S-alkyle ou S-aryle,
- le groupe $R^{21i}$, avec i = n, n'est pas un groupe S-alkyle ou S-aryle.

- A représente une chaîne polymère comprenant un bloc à caractère hydrophile et un bloc à caractère hydrophobe.

Ces copolymères amphiphiles hydrosolubles à blocs peuvent être obtenus par le procédé décrit précédemment dans lequel on remplace le composé de formule (I) par un des composés décrits ci-après :

$$\begin{array}{l} S = C(R^{21i}) - [X = C\,(Z^{21})]_n - S - R^{22} \\ \qquad\qquad\quad \backslash \\ \qquad\qquad\; (R^{23})_p \end{array} \qquad \text{(IIa)}$$

$$\begin{array}{l} S = C(Z^{21}) - [X = C\,(R^{21i})]_n - S - R^{22} \\ \qquad\qquad\quad \backslash \\ \qquad\qquad\; [R^{23}]_p \end{array} \qquad \text{(IIb)}$$

Selon un troisième mode de réalisation de l'invention, le copolymère amphiphile hydrosoluble à blocs correspond à la formule suivante :

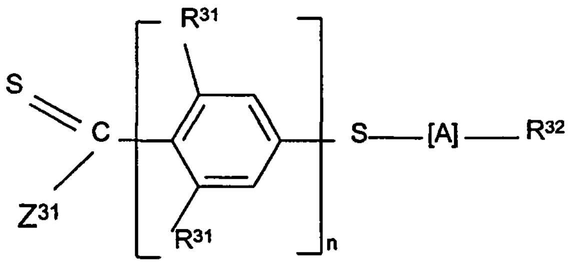

(IIIp)

formule dans laquelle :

- X représente un atome choisi parmi N, C, P ou Si,
- $R^{32}$ représente :
  - un groupe (i) alkyle, acyle, aryle, alcène ou alcyne, éventuellement substitué,
  - un cycle (ii) carboné, saturé ou non, ou aromatique, éventuellement substitué,
  - un hétérocycle (iii), saturé ou non, ou aromatique, éventuellement substitué,
- $Z^{31}$ est choisi parmi :
  - un atome d'hydrogène,
  - un groupe alkyle, acyle, aryle, alcène ou alcyne éventuellement substitué,
  - un cycle carboné saturé ou non, éventuellement substitué ou aromatique,
  - un hétérocycle saturé ou non, éventuellement substitué,
  - des groupes alkoxycarbonyl ou aryloxycarbonyl (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, allyle, époxy, alkoxy (-OR), S-alkyle, S-aryle, organosilyle, R représentant un groupe alkyle ou aryle,
  - des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),

- $R^{31}$ est $Z^{31}$ ou un groupe $SR^{32}$,
- n > 0.
- A représente une chaîne polymère comprenant un bloc à caractère hydrophile et un bloc à caractère hydrophobe.

Ces copolymères amphiphiles hydrosolubles peuvent être obtenus par le procédé décrit précédemment dans lequel on remplace le composé de formule (I) par le composé décrit ci-après :

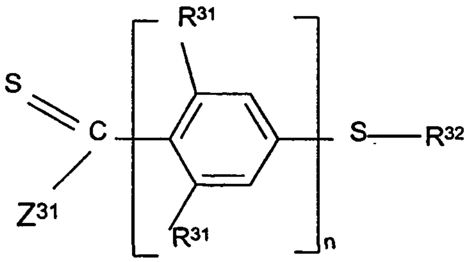

(III)

dans laquelle $R^{31}$, $R^{32}$ et $Z^{31}$ sont tels que définis précédemment.

Selon un quatrième mode de réalisation de l'invention, le copolymère amphiphile hydrosoluble à blocs correspond à la formule suivante (IVp)

$$S{=}C(Z^{41})\text{-}[C{\equiv}C]_n\text{—}S\text{—}[A]\text{-}R^{41}$$

dans laquelle :

- $R^{41}$ représente :
  - un groupe (i) alkyle, acyle, aryle, alcène ou alcyne, éventuellement substitué,
  - un cycle (ii) carboné, saturé ou non, ou aromatique, éventuellement substitué,
  - un hétérocycle (iii), saturé ou non, ou aromatique, éventuellement substitué,
- $Z^{41}$ représente :
  - un atome d'hydrogène,
  - un groupe alkyle, acyle, aryle, alcène ou alcyne éventuellement substitué,
  - un cycle carboné saturé ou non, éventuellement substitué ou aromatique,
  - un hétérocycle saturé ou non, éventuellement substitué,
  - des groupes alkoxycarbonyl ou aryloxycarbonyl (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, allyle, époxy, alkoxy (-OR), S-alkyle, S-aryle, organosilyle, R représentant un groupe alkyle ou aryle,
  - des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),
- n>0
- A représente une chaîne polymère comprenant un bloc à caractère hydrophile et un bloc à caractère hydrophobe.

Ces copolymères amphiphiles hydrosolubles peuvent être obtenus par le procédé décrit précédemment dans lequel on remplace le composé de formule (I) par le composé décrit ci-après de formule (IV):

$$S{=}C(Z^{41})\text{-}[C{\equiv}C]_n\text{—}S\text{—}R^{41}$$

dans laquelle $Z^{41}$ et $R^{41}$ sont tels que définis à la formule (IVp).

Selon un cinquième mode de réalisation de l'invention, le copolymère amphiphile hydrosoluble correspond à

la formule suivante :

$$S = C(OR^{51})\text{-}S\text{-}[A]\text{-}R^{52} \qquad (Vp)$$

dans laquelle :

- $R^{51}$ représente :

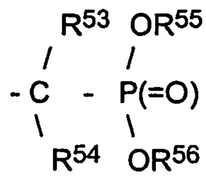

dans laquelle :

- • $R^{53}$, $R^{54}$, identiques ou non, sont choisis parmi les groupes halogène, = O, =S, $-NO_2$, $-SO_3R$, NCO, CN, OR, -SR, $-NR_2$, -COOR, $O_2CR$, $-CONR_2$, $-NCOR_2$ avec R représentant un atome d'hydrogène ou un radical alkyle, alcényle, alcynyle, cycloacényle, cycloalcynyle, aryle éventuellement condensé à un hétérocycle aromatique ou non, alkylaryle, aralkyle, hétéroaryle ; ces radicaux peuvent éventuellement être substitués par un ou plusieurs groupes identiques ou non, choisis parmi les halogènes, = O, =S, OH, alcoxy, SH, thioalcoxy, $NH_2$, mono ou di-alkylamino, CN, COOH, ester, amide, $CF_3$ et/ou éventuellement interrompu par un ou plusieurs atomes choisis parmi O, S, N, P ; ou parmi un groupe hétérocyclique éventuellement substitué par un ou plusieurs groupes tels que définis précédemment ;
  ou $R^{53}$ et $R^{54}$ forment ensemble avec l'atome de carbone auquel ils sont attachés, un cycle hydrocarboné ou un hétérocycle ;
- • $R^{55}$, $R^{56}$, identiques ou non, représentent un groupe tel que défini ci-dessus pour R ; ou forment ensemble une chaîne hydrocarbonée en $C_2$-$C_4$, éventuellement interrompue par un hétéroatome choisi parmi O, S et N ;

- $R^{52}$ possède la même définition que celle donnée pour $R^{53}$ ;
- A représente une chaîne polymère comprenant un bloc à caractère hydrophile et un bloc à caractère hydrophobe.

Selon une variante préférée, les groupes $R^{53}$ sont choisis parmi $-CF_3$, $-CF_2CF_2CF_3$, CN, $NO_2$.

Avantageusement, $R^{54}$ représente un atome d'hydrogène.

Les radicaux $R^{55}$ et $R^{56}$ identiques ou non, représentent un radical alkyle, de préférence en $C_1$-$C_6$.

Ces copolymères amphiphiles hydrosolubles peuvent être obtenus par le procédé décrit précédemment dans lequel on remplace le composé de formule (I) par un des composés décrit ci-après :

$$S = C(OR^{51})\text{-}S\text{-}R^{52} \qquad (V\text{-}1)$$

$$R^{51}\ \text{-}(O\text{-}C(=S)\text{-}\ R^{52})p \qquad (V\text{-}2)$$

$$R^{51}\text{-}(S\text{-}C(=S)\text{-}O\text{-}\ R^{51})p \qquad (V\text{-}3)$$

dans laquelle $R^{51}$ et $R^{52}$ sont tels que définis à la formule (Vp) et p représente un entier compris entre 2 et 10.

Tous les groupes et cycles (i), (ii) et (iii) et radicaux substitués décrits précédemment peuvent être substitués par des groupes choisis par des phényles substitués, des groupes aromatiques substitués ou des groupes alkoxycarbonyle ou aryloxycarbonyle (-COOR), carboxy(-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, allyle, époxy, alkoxy (-OR), S-alkyle, S-aryle, les groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires), R représentant un groupe alkyle ou aryle.

Les copolymères obtenus par les procédés décrit précédemment présentent en général un indice de polydispersité d'au plus 2, de préférence d'au plus 1,5.

On peut souhaiter mélanger au latex, des blocs dont on contrôle la polydispersité. Dans ce cas, on peut procéder

à un mélange dans des proportions précises de plusieurs copolymères amphiphiles hydrosolubles comprenant un bloc à caractère hydrophile et un bloc à caractère hydrophobe, chacun ayant une masse moléculaire bien définie.

Lorsqu'on utilise des monomères hydrophobes hydrolysables, l'hydrolyse peut être réalisée à l'aide d'une base ou d'un acide. La base peut être choisie parmi les hydroxydes de métaux alcalins ou alcalino-terreux, tels que la soude ou la potasse, les alcoolates de métaux alcalins tels que le méthylate de sodium, l'éthylate de sodium, le méthylate de potassium, l'éthylate de potassium, le t-butylate de potassium, l'ammoniac et les amines telles que les triéthylamines. Les acides peuvent être choisis parmi l'acide sulfurique, l'acide chlorhydrique, l'acide paratoluènesulfonique. On peut également utiliser une résine échangeuse d'ions ou une membrane échangeuse d'ions de type cationique ou anionique. L'hydrolyse est généralement réalisée à une température comprise entre 5 et 100°C, de préférence entre 15 et 90°C.

De préférence, après hydrolyse, le copolymère à blocs est lavé, par exemple par dialyse avec de l'eau ou à l'aide de solvant comme l'alcool. Il peut également être précipité en abaissant le pH en dessous de 4,5.

L'hydrolyse peut être réalisée sur un polymère monobloc qui sera ensuite associé à d'autres blocs, ou sur le polymère à blocs final.

Le latex de la présente invention comprend en dispersion un polymère insoluble dans l'eau obtenu à partir de monomères à insaturations éthyléniques. Tous les monomères qui ont été cités dans le cadre de la définition du copolymère amphiphile hydrosoluble peuvent être utilisés comme monomères à insaturations éthyléniques entrant dans la fabrication du latex. On pourra donc se référer à cette partie de la description pour choisir un monomère à insaturations éthyléniques utile.

Parmi ces monomères, on peut citer tout particulièrement ceux correspondant à la formule suivante :

$$CXdX'd\ (= CVd\text{-}\ CV'd)_t = CH_2$$

dans laquelle

- Xd, X'd, identiques ou différents, représentent : H, un groupe alkyle ou un halogène,
- Vd, V'd, identiques ou différents, représentent H, un halogène ou un groupe R, OR, OCOR, NHCOH, OH, $NH_2$, NHR, $N(R)_2$, $(R)_2N^+O^-$, NHCOR, $CO_2H$, $CO_2R$, CN, $CONH_2$, CONHR ou $CONR_2$, dans lesquels R, identiques ou non, sont choisis parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique,
- t vaut 0 ou 1.

Selon un mode de réalisation particulier de l'invention, les monomères mis en oeuvre sont de préférence des monomères hydrophobes.

Il est à noter que de préférence, on met en oeuvre, en tant que monomères éthyléniquement insaturés, au moins un monomère choisi parmi le styrène ou ses dérivés, le butadiène, le chloroprène, les esters (méth)acryliques, les esters vinyliques et les nitriles vinyliques. Selon un mode de réalisation particulier, le monomère est choisi pour donner un polymère filmogène insoluble dans l'eau.

Le latex peut être obtenu par polymérisation radicalaire des monomères en présence d'un amorceur de polymérisation radicalaire. Celui-ci peut être choisi parmi les initiateurs classiquement utilisés en polymérisation radicalaire. Il peut s'agir par exemple d'un des initiateurs suivants :

- les peroxydes d'hydrogène tels que : l'hydroperoxyde de butyle tertiaire, l'hydroperoxyde de cumène, le t-butylperoxyacétate, le t-butylperoxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexanecarbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis [2-méthyl-N-(2-hydroxyéthyl) propionamide], le 2,2'-azobis(isobutyramide) dihydrate,
- les systèmes redox comportant des combinaisons telles que :
    - les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,

- les persulfates, perborate ou perchlorate de métaux alcalins ou d'ammonium en association avec un bisulfite de métal alcalin, tel que le métabisulfite de sodium, et des sucres réducteurs,
- les persulfates de métal alcalin en association avec un acide arylphosphinique, tel que l'acide benzène phosphonique et autres similaires, et des sucres réducteurs.

La réaction de polymérisation a lieu de manière classique.

Elle est faite en présence d'un tensioactif non ionique ou anionique choisi parmi les mono-, di- ou trialkylphénols alcoxylés, les mono-, di- ou tristyrylphénols alcoxylés, les alcools gras alcoxylés et les sels alcalins ou d'ammonium de sulfates d'alkyles en $C_8$-$C_{12}$, les semi esters d'alcool gras alcoxylés sulfatés, les esters sulfonates d'alkyle en $C_{12}$-$C_{18}$, etc.

La température de polymérisation est elle aussi classique. A titre d'illustration, la température est comprise entre 50 et 120°C, plus particulièrement entre 70 et 100°C.

On obtient ainsi un latex formé d'une dispersion aqueuse de polymères insolubles dans l'eau, le polymère étant sous forme de particules de taille pouvant varier entre 10 nm et 5 $\mu$m.

Le latex à chimie de surface modifié de la présente invention est obtenu par addition à cette dispersion aqueuse de polymères insolubles dans l'eau d'un copolymère amphiphile hydrosoluble décrit précédemment. Le mélange du latex avec le copolymère amphiphile hydrosoluble s'effectue de façon classique par exemple à l'aide d'un mélangeur à pales, en introduisant sous agitation le latex dans une solution de copolymère. Le latex est de préférence une dispersion de polymère contenant de 20 à 70 % en poids d'extrait sec. La solution de copolymère amphiphile hydrosoluble présente un extrait sec généralement compris entre 1 et 40 % en poids.

Selon un mode de réalisation particulier, le mélange peut être suivi par un traitement thermique à une température comprise entre 50°C et 100°C.

La quantité de copolymère amphiphile hydrosoluble introduite dans la dispersion pour former le latex de l'invention est de préférence comprise entre 0,01 et 20 % en poids sec par rapport au poids de polymère insoluble sous forme de particules, de préférence 1 à 10 %.

Selon un mode de réalisation particulier, le polymère insoluble sous forme de particules est obtenu à partir de monomères styrène et butadiène, et le copolymère amphiphile hydrosoluble est un copolymère à bloc hydrophile obtenu à partir d'acrylate d'éthyle hydrolysé et à bloc hydrophobe obtenu à partir de styrène. Dans ce cas, la quantité de copolymère amphiphile hydrosoluble introduite dans le latex est de préférence comprise entre 1 et 5%.

Le pH du latex de la présente invention est définie en fonction de la nature du copolymère hydrosoluble amphiphile, de la nature du latex et de l'application envisagée. Il est en particulier nécessaire de choisir un copolymère amphiphile qui sera soluble au pH dans les conditions d'utilisation du latex.

On obtient ainsi un latex à propriétés de surface modifiées par un copolymère amphiphile hydrosoluble. Le copolymère amphiphile hydrosoluble lorsqu'il est introduit dans le latex interagit avec la surface des particules de polymère insoluble de sorte que la stabilité colloïdale de l'ensemble est améliorée.

Les latex à propriétés de surface modifiées par ajout de copolymères hydrosolubles amphiphiles de la présente invention peuvent être avantageusement utilisés dans des formulations destinées à des applications dans le domaine du couchage papetier, de la peinture et des matériaux de construction.

En particulier, lorsque ces latex à propriétés de surface modifiées sont destinés à des applications dans le domaine du couchage papier pour impression offset, il est particulièrement avantageux de mettre en oeuvre un latex à propriétés de surface modifiées dans lequel le polymère insoluble dans l'eau filmogène présente une température de transition vitreuse Tg inférieure à 15 °C, de préférence inférieure à 5°C, mesurée par DSC. En effet, on a remarqué que les couches papetières obtenues à partir d'un tel latex à propriétés de surface modifiées présentent un meilleur pouvoir liant en conditions humides. En particulier, les formulations de couchage obtenues à partir de ce latex à propriétés de surface modifiées présentent, une fois déposées à la surface du papier et séchés, une meilleure résistance en condition humide.

Les exemples suivants illustrent l'invention sans toutefois en limiter la portée.

## EXEMPLES

Dans les exemples qui suivent :

- $M_n$ représente la masse moléculaire moyenne en nombre des polymères, $M_n$ est exprimée en équivalents polystyrène (g/mol),
- Mw représente la masse moléculaire en poids des polymères mesurée par GPC avec le THF comme solvant d'élution, et utilisant le polystyrène comme étalon.

Pour tous les exemples qui suivent, les polymérisations sont menées à un taux de conversion des monomères supérieurs à 95 %.

**Exemple 1 - Synthèse et hydrolyse d'un copolymère amphiphile dibloc poly(styrène)-b-poly(acide acrylique)**

**1.1 synthèse du bloc à caractère hydrophobe**

La polymérisation est réalisée en émulsion, dans un réacteur double enveloppe muni d'une agitation tri-pâle en inox. En pied de cuve, on introduit, à température ambiante, 1178 g d'eau et 25,36 g de sulfate de dodécyle (Texapon K12/96). Le mélange obtenu est agité pendant 30 minutes (175 tr/min) sous azote. La température est ensuite élevée à 85°C, puis on incorpore 1,55 g de persulfate d'ammonium $(NH_4)_2S_2O_8$ dans 2,48 g d'eau.

Simultanément, on commence l'addition d'un mélange comprenant :

- 248 g dé styrène (St),
- 13,95 g d'acide méthacrylique (AMA),
- 13,95 g de méthacrylate de 2-hydroxyéthyle (HEMA), et
- 7,44 g de a-(o-éthylxanthyl)propionate de méthyle $(CH_3CHCO_2Me)SCSOEt$ (composé de formule IA).

L'addition dure 55 minutes. Quinze minutes après le début de l'ajout du mélange comprenant les comonomères et le a-(o-éthylxanthyl)propionate de méthyle, on démarre l'ajout de 0,56 g de carbonate de sodium $Na_2CO_3$ dissous dans 100 g d'eau. Ce dernier ajout est fait sur 45 minutes.

Après addition complète des divers ingrédients, on obtient un polymère en émulsion (latex), qui est maintenu à 85°C pendant une heure. Après refroidissement à température ambiante, on prélève 91 g de l'émulsion de polymère pour analyse.

Le polymère obtenu est un copolymère statistique de styrène, d'acide méthacrylique et d'HEMA contenant majoritairement des motifs styréniques.

Les résultats d'analyse sont les suivants :

- $M_n$ = 10300 g/mol
- $M_w/M_n$ = 2,1

**1.2. Synthèse du copolymère dibloc**

On part du copolymère en émulsion précédemment obtenu à l'exemple 1.1 Pendant une heure, on lui additionne à 85°C :

- 308 g d'acrylate d'éthyle (AEt),
- 16 g d'acide méthacrylique (AMA), et
- 0,94 g de $Na_2CO_3$ dilué dans 100 g d'eau.

Le système est maintenu à cette température pendant deux heures supplémentaires. On ajoute ensuite 1,46 g de perbenzoate de t-butyle. Puis, on introduit pendant une heure (jusqu'à la fin de la réaction) : 0,59 g d'acide érythorbique dilué dans 47 g d'eau.

Après refroidissement à température ambiante, on analyse le copolymère obtenu. Les résultats d'analyse sont les suivants :

- pH = 5,7
- $M_n$ = 17800 g/mol
- $M_w/M_n$ = 1,75

Le copolymère est un copolymère contenant un bloc majoritairement styrénique et un bloc d'acrylate d'éthyle, la solution contient 28,5 % d'extrait sec..

**1.3. Hydrolyse du copolymère dibloc**

L'hydrolyse est effectuée dans le même réacteur de synthèse que celui de l'exemple 1.2. On y introduit :

- 200 g du copolymère de l'exemple 1.2, exprimé en sec (702,4 g à 28,5 %),
- 1900 g d'eau (pour ajuster l'extrait sec à 10 % en poids en fin d'hydrolyse).

Le pH est ensuite ajusté à une valeur de 8 avec de la soude 1 N. La température est portée à 90°C. La réaction

est effectuée sous azote.

Sous une agitation vigoureuse (160 tr/mn), on ajoute 528 g de soude 2N (correspondant à un équivalent molaire de soude par rapport à l'acrylate d'éthyle) pendant 1 heure. Après addition complète de la soude, la réaction est maintenue dans ces conditions pendant 11 heures.

Par RMN du proton, on mesure que le taux d'hydrolyse des motifs acrylate est de 88 % en mole.

Le produit récupéré en fin de réaction est un gel translucide contenant un copolymère hydrosoluble amphiphile contenant un bloc majoritairement styrénique et un bloc à motifs acide acrylique.

**Exemple 2 :**

La dispersion de l'exemple 1 contenant le copolymère amphiphile hydrosoluble est diluée à 5 %. Cette dispersion diluée est ajoutée à un latex Rhodopas® SB 023 commercialisé par Rhodia constitué d'un latex styrène (59 %) butadiène (37 %) stabilisée par des acides carboxyliques ayant une Tg de l'ordre de 0° C, mesurée par DSC selon des quantités permettant d'obtenir les valeurs précisées dans le tableau ci-dessous. Le pH du mélange est ajusté à 8,5 par addition de soude (M). Le mélange est ensuite chauffé au bain marie pendant 10 min à 100°C.

A ce mélange, on ajoute une solution de carboxymethyl cellulose (CMC) connu pour déstabiliser les latex afin d'obtenir une dispersion contenant 0,2 % en poids de CMC (par rapport au poids total de dispersion).

A ce mélange, on ajoute une quantité d'eau afin d'obtenir un extrait sec de 10 % en poids par rapport au poids de dispersion.

Un même latex est préparé sans traitement thermique.

On évalue la stabilité du latex par la mesure de la réflectance après ajout dans la dispersion d'une quantité fixe d'un colorant bleu. Cette réflectance est mesurée à l'aide d'un Colorimètre Datacolor. Plus la réflectance est élevée, plus le système est homogène, donc stable.

Les résultats sont reportés dans le tableau 1.

TABLEAU 1

| % Diblocs | % réflectance |
|---|---|
| 0 | 17,8 |
| 0,66 | 20,2 |
| 3,33 | 21,5 |
| 6,66 | 22,8 |
| 13,3 | 25,6 |

Ces exemples montrent que l'addition du copolymère PS-PAA permet d'augmenter la stabilité de la dispersion. Les résultats obtenus avec la dispersion ayant subit un traitement thermique sont du même ordre que ceux reportés dans le tableau 1.

**Exemple 3.**

Dans cet exemple, on réalise un polymère monobloc hydrophile par polymérisation dans l'acétone d'acide acrylique. On obtient ainsi un polymère d'acide acrylique de Mn = 5000, hydrosoluble et non amphiphile. Ce polymère hydrophile est introduit dans une dispersion de latex selon le procédé décrit à l'exemple 2 sans traitement thermique. On conditionne le latex par addition de 0,2 % de CMC. On mesure dans les mêmes conditions que précédemment la réflectance du système.

Les résultats sont reportés dans le tableau 2 ci dessous.

TABLEAU 2

| % monobloc PAA | Réflectance (%) |
|---|---|
| 0% | 20 |
| 0,4% | 20 |
| 2% | 20,5 |

Ces résultats montrent que l'addition d'un polymère monobloc PAA hydrosoluble ne modifie pas la stabilité de la dispersion.

**Exemple 4**

On prépare une série de copolymères amphiphiles hydrosolubles selon le procédé de l'exemple 1 en faisant varier la quantité de monomères acide acrylique. On obtient ainsi une série de copolymères dont le rapport en masse du bloc hydrophile sur le bloc hydrophobe varie entre 0,5 et 5. La taille des blocs est mesurée par GPC. Ces copolymères à blocs sont ajoutés au latex selon le procédé de l'exemple 2 en quantité telle que l'on obtient une solution à 3 % d'extrait sec / extrait sec de latex.
Ces copolymères amphiphiles hydrosolubles ne présentent pas de propriétés tensioactives.
Les résultats sont reportés dans le tableau 3 ci dessous

TABLEAU 3

| Rapport des blocs PAA/PS | Réflectance (%) |
|---|---|
| 0,5 | 21 |
| 0,6 | 19 |
| 0,69 | 21,5 |
| 1,50 | 24,5 |
| 4,82 | 25 |

Ces résultats montrent que la stabilité de la dispersion est améliorée lorsque le rapport PAA/PS augmente.

**Exemple 5.**

Dans cet exemple, on ajoute à un latex Rhodopas® SB 023 tel que décrit précédemment un copolymère à blocs PS-PAA dont le rapport PAA/PS est égal à 1,5 en quantité telle que le latex à propriétés de surface modifiées contient 3% en poids de copolymère à blocs.
On prépare ensuite une dispersion qui contient 10 parties de ce latex à propriétés de surface modifiées et 100 parties en poids de kaolin. Le pH de la dispersion est ajusté à 8,5.
On applique cette dispersion sur un papier SIBILLE de grammage 80g/m$^2$. On dépose ensuite sur le papier la formulation mentionnée plus haut à l'aide d'une tige filetée permettant le dépôt d'une couche, qui après séchage a un grammage de 20 g/m$^2$, puis on sèche l'ensemble pendant 10 min à 70°C.
La mesure consiste à imprimer une bande de papier, préalablement humidifiée par un rouleau répartiteur d'eau, sous une pression constante, à une vitesse de 1 m/s avec une encre (Lorilleux 3801). La perte de densité optique due à l'apparition de points d'arrachage permet de quantifier l'arrachage humide. On détermine le rapport

RAH = 10 * (densité optique du papier humidifié)/(densité optique du papier sec)

Plus ce rapport est élevé, plus la couche déposée à la surface du papier présente une bonne résistance à l'arrachage humide. Dans le tableau ci dessous, sont reportées les valeurs du rapport de RAH avec un latex à propriétés de surface modifiées sur le RAH avec un latex non modifié.
La même expérience est réalisée avec un latex Rhodopas® SB 852 commercialisé par Rhodia contenant du styrène (69 %) et du butadiène (27 %) dont la température de transition vitreuse est de 20 °C mesurée par DSC.
Les résultats sont reportés dans le tableau ci-après

Tableau 4

| Tg du polymère | RAH(latex modifié)/RAH(latex) |
|---|---|
| 0 °C | 1,3 |
| 20 °C | 0,5 |

Ces exemples montrent que le pouvoir liant en condition humide est amélioré pour un latex constitué d'un polymère insoluble ayant une Tg de l'ordre de 0°C.

## Revendications

1. Latex à propriétés de surface modifiées susceptible d'être obtenu par un procédé qui comprend l'addition d'un copolymère amphiphile hydrosoluble dans une dispersion aqueuse d'un polymère insoluble dans l'eau obtenu à partir de monomères à insaturations éthyléniques, le copolymère amphiphile étant non tensio-actif et constitué de monomères hydrophobes et de monomères hydrophiles, le nombre de monomères hydrophiles étant supérieur au nombre de monomères hydrophobes.

2. Latex selon la revendication 1 dans lequel le copolymère amphiphile hydrosoluble est un copolymère à blocs comprenant un bloc à caractère hydrophile et un bloc à caractère hydrophobe.

3. Latex selon l'une quelconque des revendications 1 ou 2 dans lequel le copolymère amphiphile hydrosoluble présente une masse moléculaire comprise entre 5000 et 30000 g/mol.

4. Latex selon l'une quelconque des revendications 2 ou 3 dans lequel le rapport des masses moléculaires en nombre du bloc hydrophile sur le bloc hydrophobe est supérieur ou égal à 1.

5. latex selon l'une quelconque des revendication 2 à 4 dans lequel le bloc hydrophile contient des motifs hydrophiles dans une proportion supérieure à 25 % en poids par rapport au poids total de motifs dans le bloc hydrophile.

6. Latex selon l'une quelconque des revendications 2 à 4 dans lequel le bloc hydrophobe contient des motifs hydrophiles dans une proportion supérieure à 50 % en poids par rapport au poids de motifs du bloc à caractère hydrophobe.

7. Latex selon l'une quelconque des revendications 2 à 6 dans lequel le copolymère à blocs correspond à la formule suivante :

   $$S{=}C\,(Z''(R'')x)\text{ - }S\text{- }[A]\text{ - }R^{12} \qquad \text{(Ip)}$$

   dans laquelle :

   - $Z^{11}$ représente C, N, O, S ou P,
   - $R^{11}$ et $R^{12}$, identiques ou différents, représentent :

     . un groupe (i) alkyle, acyle, aryle, alcène ou alcyne, éventuellement substitué,
     . un cycle (ii) carboné, saturé ou non, ou aromatique, éventuellement substitué,
     . un hétérocycle (iii), saturé ou non, éventuellement substitué,

   - x correspond à la valence de Z11 ou bien x vaut 0 et dans ce cas, Z11 est R11.
   - A représente une chaîne polymère comprenant un bloc à caractère hydrophile et un bloc à caractère hydrophobe.

8. Latex selon l'une quelconque des revendications 2 à 6 dans lequel le copolymère à blocs correspond à l'une des formules suivantes :

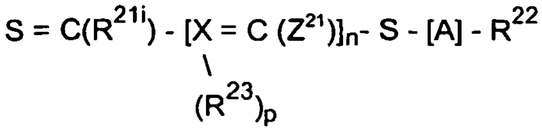

(IIa-p)

et/ou :

$$S = C(Z^{21}) - [X = C(R^{21i})]_n - S - [A] - R^{22} \quad \backslash [R^{23}]_p$$ (IIb-p)

dans lesquelles :

- X représente un atome choisi parmi N, C, P ou Si,
- $R^{22}$ représente :

  • un groupe (i) alkyle, acyle, aryle, alcène ou alcyne éventuellement substitué, ou
  • un cycle (ii) carboné, saturé ou non, éventuellement substitué ou aromatique, ou
  • un hétérocycle (iii), saturé ou non, éventuellement substitué ou aromatique,

- $Z^{21}$, $R^{21i}$, $R^{23}$, identiques ou différents, sont choisis parmi :

  • un atome d'hydrogène,
  • un groupe alkyle, acyle, aryle, alcène ou alcyne éventuellement substitué,
  • un cycle carboné saturé ou non, éventuellement substitué ou aromatique,
  • un hétérocycle saturé ou non, éventuellement substitué,
  • des groupes alkoxycarbonyl ou aryloxycarbonyl (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, allyle, époxy, alkoxy (-OR), S-alkyle, S-aryle, organosilyle, R représentant un groupe alkyle ou aryle,
  • des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),

- $n > 0$,
- i varie de 1 à n,
- p égale 0, 1 ou 2 selon la valence de X

de plus,

- si X = C, alors $Z^{21}$ n'est pas un groupe S-alkyle ou S-aryle,
- le groupe $R^{21i}$, avec i = n, n'est pas un groupe S-alkyle ou S-aryle.
- A représente une chaîne polymère comprenant un bloc à caractère hydrophile et un bloc à caractère hydrophobe.

**9.** Latex selon l'une quelconque des revendications 2 à 6 dans laquelle le copolymère amphiphile hydrosoluble à blocs correspond à la formule suivante :

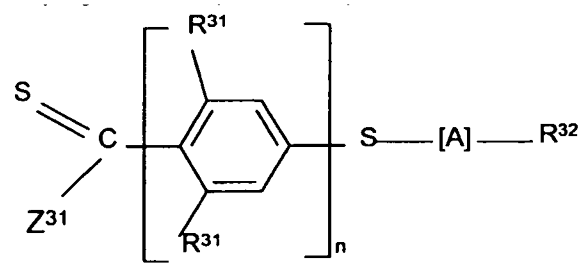

(IIIp)

dans laquelle :

- X représente un atome choisi parmi N, C, P ou Si,

- $R^{32}$ représente :

  - un groupe (i) alkyle, acyle, aryle, alcène ou alcyne éventuellement substitué, ou
  - un cycle (ii) carboné, saturé ou non, ou aromatique, éventuellement substitué, ou
  - un hétérocycle (iii), saturé ou non, ou aromatique, éventuellement substitué,

- $Z^{31}$ est choisi parmi :

  - un atome d'hydrogène,
  - un groupe alkyle, acyle, aryle, alcène ou alcyne éventuellement substitué,
  - un cycle carboné saturé ou non, éventuellement substitué ou aromatique,
  - un hétérocycle saturé ou non, éventuellement substitué,
  - des groupes alkoxycarbonyl ou aryloxycarbonyl (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, allyle, époxy, alkoxy (-OR), S-alkyle, S-aryle, organosilyle, R représentant un groupe alkyle ou aryle,
  - des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),

- $R^{31}$ est $Z^{31}$ ou un groupe $SR^{32}$,
- n > 0.
- A représente une chaîne polymère comprenant un bloc à caractère hydrophile et un bloc à caractère hydrophobe.

**10.** Latex selon l'une quelconque des revendications 2 à 6 dans lequel, le copolymère amphiphile hydrosoluble à blocs correspond à la formule suivante :

$$S{=}C(Z^{41})\text{-}[C{\equiv}C]_n\text{—}S\text{—}[A]\text{-}R^{41} \qquad (IVp)$$

formule dans laquelle :

- $R^{41}$ représente :

  - un groupe (i) alkyle, acyle, aryle, alcène ou alcyne éventuellement substitué, ou
  - un cycle (ii) carboné, saturé ou non, éventuellement substitué ou aromatique, ou
  - un hétérocycle (iii), saturé ou non, éventuellement substitué ou aromatique,

- $Z^{41}$, représente :

  - un atome d'hydrogène,
  - un groupe alkyle, acyle, aryle, alcène ou alcyne éventuellement substitué,
  - un cycle carboné saturé ou non, éventuellement substitué ou aromatique,
  - un hétérocycle saturé ou non, éventuellement substitué,
  - des groupes alkoxycarbonyl ou aryloxycarbonyl (-COOR), carboxy (-COOH), acyloxy ($-O_2CR$), carbamoyle ($-CONR_2$), cyano (-CN), alkylcarbonyle, - alkylarylcarbonyle, arylcarbonyle, arylalkylcarbonyle, phtalimido, maleïmido, succinimido, amidino, guanidimo, hydroxy (-OH), amino ($-NR_2$), halogène, allyle, époxy, alkoxy (-OR), S-alkyle, S-aryle, organosilyle, R représentant un groupe alkyle ou aryle,
  - des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),

- n>0
- A représente une chaîne polymère comprenant un bloc à caractère hydrophile et un bloc à caractère hydrophobe.

**11.** Latex selon l'une quelconque des revendications 2 à 6 dans lequel le copolymère amphiphile hydrosoluble correspond à la formule suivante :

$$S = C(OR^{51})\text{-}S\text{-}(A)\text{-}R^{52} \qquad (Vp)$$

dans laquelle :

- $R^{51}$ représente :

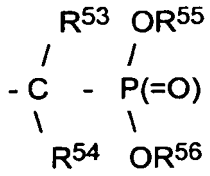

dans laquelle :

$R^{53}$, $R^{54}$, identiques ou non, sont choisis parmi les groupes halogène, = O, =S, $-NO_2$, $-SO_3R$, NCO, CN, OR, -SR, $-NR_2$, -COOR, $O_2CR$, $-CONR_2$, $-NCOR_2$ avec R représentant un atome d'hydrogène ou un radical alkyle, alcényle, alcynyle, cycloacényle, cycloalcynyle, aryle éventuellement condensé à un hétérocycle aromatique ou non, alkylaryle, aralkyle, hétaroaryle ; ces radicaux peuvent éventuellement être substitués par un ou plusieurs groupes identiques ou non, choisis parmi les halogènes, = O, =S, OH, alcoxy, SH, thioalcoxy, $NH_2$, mono ou di-alkylamino, CN, COOH, ester, amide, $CF_3$ et/ou éventuellement interrompu par un ou plusieurs atomes choisis parmi O, S, N, P ; ou parmi un groupe hétérocyclique éventuellement substitué par un ou plusieurs groupes tels que définis précédemment ;
ou $R^{53}$ et $R^{54}$ forment ensemble avec l'atome de carbone auquel ils sont attachés, un cycle hydrocarboné ou un hétérocycle ;

- $R^{53}$, $R^{56}$, identiques ou non, représentent un groupe tel que défini ci-dessus pour R ; ou forment ensemble une chaîne hydrocarbonée en $C_2$-$C_4$, éventuellement interrompue par un hétéroatome choisi parmi O, S et N ;
- $R^{52}$ possède la même définition que celle donnée pour $R^{53}$ ;
- A représente une chaîne polymère comprenant un bloc à caractère hydrophile et un bloc à caractère hydrophobe.

**12.** Latex selon l'une quelconque des revendications précédentes 1 à 11 dans lequel le polymère à insaturation éthylénique est obtenu à partir de monomères éthyléniquement insaturés choisis parmi :

$$CXdX'd\ (= CVd\text{-}\ CV'd)t = CH_2$$

- Xd, X'd, identiques ou différents, représentent : H, un groupe alkyle ou un halogène,
- Vd, V'd, identiques ou différents, représentent H, un halogène ou un groupe R, OR, OCOR, NHCOH, OH, $NH_2$, NHR, $N(R)_2$, $(R)_2N^+O^-$, NHCOR, $CO_2H$, $CO_2R$, CN, $CONH_2$, CONHR ou $CONR_2$, dans lesquels R, identiques ou non, sont choisis parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique.
- t vaut 0 ou 1.

**13.** Latex selon la revendication 12 **caractérisé en ce que** le ou les monomères éthyléniquement insaturés sont choisis parmi : le styrène ou ses dérivés, le butadiène, le chloroprène, les esters (méth)acryliques et les nitriles vinyliques.

**14.** Latex selon l'une quelconque des revendications précédentes 1 à 14 dans lequel le polymère insoluble dans l'eau présente une Tg inférieure à 15 °C.

**15.** Formulations destinées à des applications dans les domaines du couchage papetier, de la peinture ou des matériaux de construction, comprenant le latex à propriété de surface modifiée selon l'une quelconque des revendications 1 à 14.

## Claims

1. A latex with modified surface properties which can be obtained using a process which comprises addition of a water-soluble amphiphilic copolymer to an aqueous dispersion of a water-insoluble polymer obtained from monomers comprising ethylenic unsaturations, the water-soluble amphiphilic copolymer being non-surfactant and consisting of hydrophobic monomers and hydrophilic monomers, the number of hydrophilic monomers being greater than the number of hydrophobic monomers.

2. The latex as claimed in claim 1, in which the water-soluble amphiphilic copolymer is a block copolymer comprising a block which is hydrophilic in nature and a block which is hydrophobic in nature.

3. The latex as claimed in claim 2, in which the water-soluble amphiphilic copolymer has a molecular mass between 5 000 and 30 000 g/mol.

4. The latex as claimed in any one of claims 2 to 3, in which the ratio of the number-average molecular mass of the hydrophilic block to the number-average molecular mass of the hydrophobic block is greater than or equal to 1.

5. The latex as claimed in any one of claims 2 to 4, in which the hydrophilic block contains hydrophilic units in a proportion of greater than 25% by weight relative to the total weight of units in the hydrophilic block.

6. The latex as claimed in any one of claims 2 to 4, in which the hydrophobic block contains hydrophilic units in a proportion of greater than 50% by weight relative to the weight of units of the block which is hydrophobic in nature.

7. The latex as claimed in any one of claims 2 to 6, in which the block copolymer corresponds to the following formula:

$$S=C(Z^{11}(R^{11})_x)\text{-}S\text{-}[A]\text{-}R^{12} \qquad (Ip)$$

in which:

- $Z^{11}$ represents C, N, 0, S or P,
- $R^{11}$ and $R^{12}$, which may be identical or different, represent:

. (i) an optionally substituted alkyl, acyl, aryl, alkene or alkyne group,
. (ii) an optionally substituted, saturated or unsaturated, or aromatic, carbon-based ring,
. (iii) an optionally substituted, saturated or unsaturated heterocycle,

- x corresponds to the valency of $Z^{11}$ or x equals 0 and, in this case, $Z^{11}$ is $R^{11}$;
- A represents a polymer chain comprising a block which is hydrophilic in nature and a block which is hydrophobic in nature.

8. The latex as claimed in any one of claims 2 to 6, in which the block copolymer corresponds to one of the following formulae:

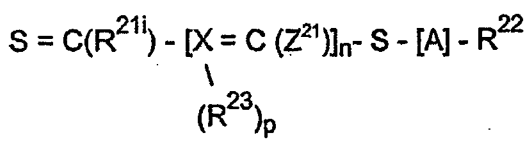

(IIa-p)

and/or:

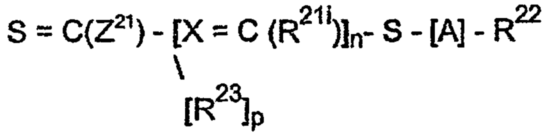

(IIb-p)

in which formulae:

- X represents an atom chosen from N, C, P or Si,
- $R^{22}$ represents:
  - (i) an optionally substituted alkyl, acyl, aryl, alkene or alkyne group, or
  - (ii) an optionally substituted, or aromatic, saturated or unsaturated, carbon-based ring, or
  - (iii) an optionally substituted, or aromatic, saturated or unsaturated, heterocycle,
- $Z^{21}$, $R^{21i}$ and $R^{23}$, which may be identical or different, are chosen from:
  - a hydrogen atom
  - an optionally substituted alkyl, acyl, aryl, alkene or alkyne group,
  - an optionally substituted, or aromatic, saturated or unsaturated, carbon-based ring,
  - an optionally substituted, saturated or unsaturated, heterocycle,
  - alkoxycarbonyl or aryloxycarbonyl (-COOR), carboxy (-COOH), acyloxy ($-O_2CR$), carbamoyl ($-CONR_2$), cyano (-CN), alkylcarbonyl, alkylarylcarbonyl, arylcarbonyl, arylalkylcarbonyl, phthalimido, maleimido, succinimido, amidino, guanidimo, hydroxy (-OH), amino ($-NR_2$), halogen, allyl, epoxy, alkoxy (-OR), S-alkyl, S-aryl or organosilyl groups, R representing an alkyl or aryl group,
  - groups exhibiting a hydrophilic or ionic nature, such as alkali metal salts of carboxylic acids, alkali metal salts of sulfonic acid, poly(alkylene oxide) (PEO, PPO) chains or cationic substituents (quaternary ammonium salts),
- $n > 0$,
- i ranges from 1 to n,
- p equals 0, 1 or 2 depending on the valency of X in addition,
- if X = C, then $Z^{21}$ is not an S-alkyl or S-aryl group,
- the group $R^{21i}$, with i = n, is not an S-alkyl or S-aryl group,
- A represents a polymer chain comprising a block which is hydrophilic in nature and a block which is hydrophobic in nature.

**9.** The latex as claimed in any one of claims 2 to 6, in which the water-soluble amphiphilic block copolymer corresponds to the following formula:

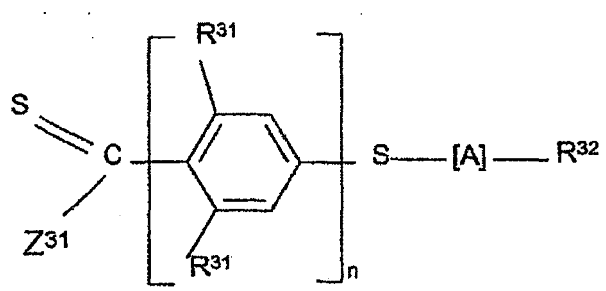

(IIIp)

in which formula:

- X represents an atom chosen from N, C, P or Si,

- $R^{32}$ represents:

  - (i) an optionally substituted alkyl, acyl, aryl, alkene or alkyne group, or
  - (ii) an optionally substituted, saturated or unsaturated, or aromatic, carbon-based ring, or
  - (iii) an optionally substituted, saturated or unsaturated, or aromatic, heterocycle,

- $Z^{31}$ is chosen from:

  - a hydrogen atom,
  - an optionally substituted alkyl, acyl, aryl, alkene or alkyne group,
  - an optionally substituted, or aromatic, saturated or unsaturated, carbon-based ring,
  - an optionally substituted, saturated or unsaturated, heterocycle,
  - alkoxycarbonyl or aryloxycarbonyl (-COOR), carboxy (-COOH), acyloxy ($-O_2CR$), carbamoyl ($-CONR_2$), cyano (-CN), alkylcarbonyl, alkylarylcarbonyl, arylcarbonyl, arylalkylcarbonyl, phthalimido, maleimido, succinimido, amidino, guanidimo, hydroxy (-OH), amino ($-NR_2$), halogen, allyl, epoxy, alkoxy (-OR), S-alkyl, S-aryl or organosilyl groups, R representing an alkyl or aryl group,
  - groups exhibiting a hydrophilic or ionic nature, such as alkali metal salts of carboxylic acids, alkali metal salts of sulfonic acid, poly(alkylene oxide) (PEO, PPO) chains or cationic substituents (quaternary ammonium salts),

- $R^{31}$ is $Z^{31}$ or a group $SR^{32}$,
- $n > 0$,
- A represents a polymer chain comprising a block with a hydrophilic nature and a block with a hydrophobic nature.

**10.** The latex as claimed in any one of claims 2 to 6, in which the water-soluble amphiphilic block copolymer corresponds to the following formula:

$$S{=}C(Z^{41}){-}[C{\equiv}C]_n{-}S{-}[A]{-}R^{41}$$

(IVp)

in which formula:

- $R^{41}$ represents:

  - (i) an optionally substituted alkyl, acyl, aryl, alkene or alkyne group, or
  - (ii) an optionally substituted, or aromatic, saturated or unsaturated, carbon-based ring, or
  - (iii) an optionally substituted, or aromatic, saturated or unsaturated, heterocycle,

- $Z^{41}$ represents:

  - a hydrogen atom,
  - an optionally substituted alkyl, acyl, aryl, alkene or alkyne group,
  - an optionally substituted, or aromatic, saturated or unsaturated, carbon-based ring,
  - an optionally substituted, saturated or unsaturated, heterocycle,
  - alkoxycarbonyl or aryloxycarbonyl (-COOR), carboxy (-COOH), acyloxy ($-O_2CR$), carbamoyl ($-CONR_2$), cyano (-CN), alkylcarbonyl, alkylarylcarbonyl, arylcarbonyl, arylalkylcarbonyl, phthalimido, maleimido, succinimido, amidino, guanidimo, hydroxy (-OH), amino ($-NR_2$), halogen, allyl, epoxy, alkoxy (-OR), S-alkyl, S-aryl or organosilyl groups, R representing an alkyl or aryl group,
  - groups exhibiting a hydrophilic or ionic nature, such as alkali metal salts of carboxylic acids, alkali metal salts of sulfonic acid, poly(alkylene oxide) (PEO, PPO) chains or cationic substituents (quaternary ammonium salts),

- $n > 0$,
- A represents a polymer chain comprising a block which is hydrophilic in nature and a block which is hydrophobic

in nature.

**11.** The latex as claimed in any one of claims 2 to 6, in which the water-soluble amphiphilic copolymer corresponds to the following formula:

$$S = C(OR^{51})\text{-}S\text{-}[A]\text{-}R^{52} \qquad (Vp)$$

in which:

- $R^{51}$ represents:

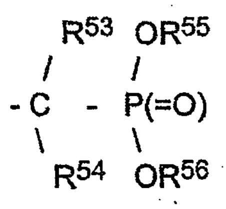

in which:

• $R^{53}$, $R^{54}$, which may be identical or different, are chosen from halogen, =O, =S,- $NO_2$, $-SO_3R$, NCO, CN, OR, -SR, $-NR_2$, -COOR, $O_2CR$, $-CONR_2$ and $-NCOR_2$ groups, with R representing a hydrogen atom or an alkyl, alkenyl, alkynyl, cycloalkenyl or cycloalkynyl radical, an aryl radical optionally condensed with an aromatic or nonaromatic heterocycle, or an alkylaryl, aralkyl or heteroaryl radical; these radicals can optionally be substituted with one or more groups, which may be identical or different, chosen from halogens, =O, =S, OH, alkoxy, SH, thioalkoxy, $NH_2$, mono- or dialkylamino, CN, COOH, ester, amide and $CF_3$, and/or optionally interrupted by one or more atoms chosen from O, S, N and P; or from a heterocyclic group optionally substituted with one or more groups as defined above; or $R^{53}$ and $R^{54}$ form, together with the carbon atom to which they are attached, a hydrocarbon-based ring or a heterocycle;

- $R^{53}$, $R^{56}$, which may be identical or different, represent a group as defined above for R; or together form a $C_2$-$C_4$ hydrocarbon-based chain optionally interrupted by a hetero atom chosen from 0, S and N;
- $R^{52}$ has the same definition as that given for $R^{53}$;
- A represents a polymer chain comprising a block which is hydrophilic in nature and a block which is hydrophobic in nature.

**12.** The latex as claimed in any one of claims 1 to 11, in which the polymer comprising an ethylenic unsaturation is obtained from ethylenically unsaturated monomers chosen from:

$$CXdX'd\,(= CVd\text{-}CV'd)_t = CH_2$$

- Xd and X'd, which may be identical or different, represent: H, an alkyl group or a halogen,
- Vd and V'd, which may be identical or different, represent H, a halogen or an R, OR, OCOR, NHCOH, OH, $NH_2$, NHR, $N(R)_2$, $(R)_2N^+O^-$, NHCOR, $CO_2H$, $CO_2R$, CN, $CONH_2$, CONHR or $CONR_2$ group, in which R, which may be identical or different, are chosen from alkyl, aryl, aralkyl, alkaryl, alkene or organosilyl groups, optionally perfluorinated and optionally substituted with one or more carboxy, epoxy, hydroxyl, alkoxy, amino, halogen or sulfonic groups,
- t equals 0 or 1.

**13.** The latex as claimed in claim 12, **characterized in that** the ethylenically unsaturated monomer(s) is(are) chosen from: styrene or derivatives thereof, butadiene, chloroprene, (meth)acrylic esters and vinyl nitriles.

**14.** The latex as claimed in any one of the preceding claims 1 to 13, in which the water-insoluble polymer has a Tg below 15°C.

**15.** A formulation intended for applications in the fields of papermaking coating, paints or construction materials, comprising the latex with modified surface property as claimed in any one of claims 1 to 14.

## Patentansprüche

1. Latex mit modifizierten Oberflächeneigenschaften, der durch ein Verfahren erhalten werden kann, das die Zugabe eines wasserlöslichen amphiphilen Copolymers in eine wässrige Dispersion eines in Wasser unlöslichen Polymers, das ausgehend von Monomeren mit ethylenischen Unsättigungen erhalten wird, umfasst, wobei das amphiphile Copolymer nicht oberflächenaktiv ist und aus hydrophoben Monomeren und hydrophilen Monomeren besteht, wobei die Anzahl der hydrophilen Monomere größer ist als die Anzahl der hydrophoben Monomere.

2. Latex nach Anspruch 1, wobei das wasserlösliche amphiphile Copolymer ein Blockcopolymer ist, das einen Block mit hydrophilem und einen Block mit hydrophobem Charakter umfasst.

3. Latex nach einem der Ansprüche 1 oder 2, wobei das wasserlösliche amphiphile Copolymer eine Molekülmasse zwischen 5000 und 30000 g/mol aufweist.

4. Latex nach einem der Ansprüche 2 oder 3, wobei das Zahlenverhältnis der Molekülmassen des hydrophilen Blocks zu dem hydrophoben Block größer oder gleich 1 ist.

5. Latex nach einem der Ansprüche 2 bis 4, wobei der hydrophile Block hydrophile Gruppierungen in einem Anteil von über 25 Gew.-% bezüglich des Gesamtgewichts von Gruppierungen in dem hydrophilen Block enthält.

6. Latex nach einem der Ansprüche 2 bis 4, wobei der hydrophobe Block hydrophile Gruppierungen in einem Anteil von über 50 Gew.-% bezüglich des Gewichts von Gruppierungen des Blocks mit hydrophobem Charakter enthält.

7. Latex nach einem der Ansprüche 2 bis 6, wobei das Blockcopolymer der folgenden Formel entspricht:

$$S{=}C\ (Z^{11}(R^{11})X)\text{-}S\text{-}[A]\text{-}R^{12} \qquad (Ip)$$

wobei:

- $Z^{11}$ C, N, O, S oder P darstellt,
- $R^{11}$ und $R^{12}$, gleich oder verschieden, folgendes darstellen:

   (i) eine Gruppe Alkyl, Acyl, Aryl, Alken oder Alkin, gegebenenfalls substituiert;
   (ii) einen Carbocyclus, gesättigt oder ungesättigt oder aromatisch, gegebenenfalls substituiert;
   · (iii) einen Heterocyclus, gesättigt oder ungesättigt, gegebenenfalls substituiert;

- x der Valenz von $Z^{11}$ entspricht oder x 0 ist und in diesem Fall $Z^{11}$ $R^{11}$ ist;
- A eine Polymerkette darstellt, die einen Block mit hydrophilem und einen Block mit hydrophobem Charakter umfasst.

8. Latex nach einem der Ansprüche 2 bis 6, wobei das Blockcopolymer einer der folgenden Formeln entspricht:

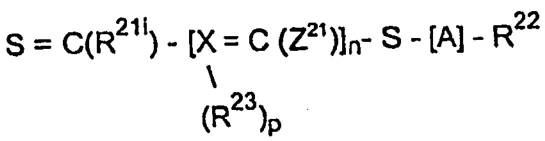

(IIa-p)

und/oder

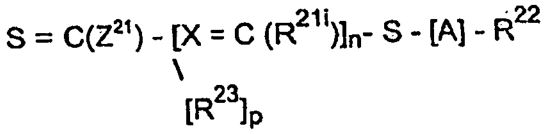

(IIb-p)

wobei

- X ein Atom darstellt, ausgewählt aus N, C, P oder Si;
- $R^{22}$ folgendes darstellt:
    - · (i) eine Gruppe Alkyl, Acyl, Aryl, Alken oder Alkin, gegebenenfalls substituiert, oder
    - · (ii) einen Carbocyclus, gesättigt oder ungesättigt, gegebenenfalls substituiert oder aromatisch, oder
    - · (iii) einen Heterocyclus, gesättigt oder ungesättigt, gegebenenfalls substituiert oder aromatisch,
- $Z^{21}$, $R^{21i}$, $R^{23}$, gleich oder verschieden, ausgewählt sind aus:
    - · einem Wasserstoffatom,
    - · einer Gruppe Alkyl, Acyl, Aryl, Alken oder Alkin, gegebenenfalls substituiert,
    - · einem Carbocyclus, gesättigt oder ungesättigt, gegebenenfalls substituiert oder aromatisch,
    - · einem Heterocyclus, gesättigt oder ungesättigt, gegebenenfalls substituiert, · den Gruppen Alkoxycarbonyl oder Aryloxycarbonyl (-COOR), Carboxy (-COOH), Acyloxy ($-O_2CR$), Carbamoyl ($-CONR_2$), Cyano (-CN), Alkylcarbonyl, Alkylarylcarbonyl, Arylcarbonyl, Arylalkylcarbonyl, Phtalimido, Maleimido, Succinimido, Amidino, Guanidimo, Hydroxy (-OH), Amino ($-NR_2$), Halogen, Allyl, Epoxy, Alkoxy (-OR), S-Alkyl, S-Aryl, Organosilyl, wobei R eine Alkyl- oder Arylgruppe darstellt;
    - · Gruppen, die einen hydrophilen oder ionischen Charakter aufweisen, wie die alkalischen Salze von Carbonsäuren, die alkalischen Salze von Sulfonsäuren, die Polyoxyalkylenketten (POE, POP), die kationischen Substituenten (quaternäre Ammoniumsalze),
- n > 0 bedeutet,
- i von 1 bis n variiert,
- p 0, 1 oder 2 ist, je nach Valenz von X,

ferner,

- wenn X=C bedeutet, $Z^{21}$ dann keine S-Alkyl- oder S-Arylgruppe ist,
- die Gruppe $R^{21i}$, wobei i=n bedeutet, keine S-Alkyl- oder S-Arylgruppe ist,
- A eine Polymerkette darstellt, die einen Block mit hydrophilem und einen Block mit hydrophobem Charakter umfasst.

**9.** Latex nach einem der Ansprüche 2 bis 6, wobei das wasserlösliche amphiphile Blockcopolymer der folgenden Formel entspricht:

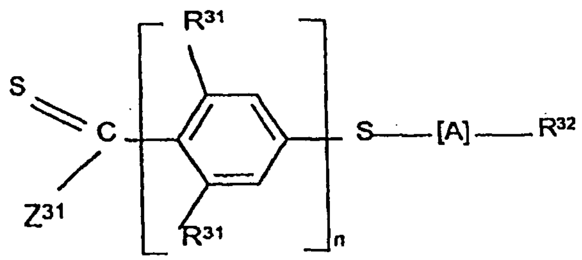

(IIIp)

wobei

- X ein Atom darstellt, ausgewählt aus N, C, P oder Si,

- $R^{32}$ folgendes darstellt:

  · (i) eine Gruppe Alkyl, Acyl, Aryl, Alken oder Alkin, gegebenenfalls substituiert, oder
  · (ii) einen Carbocyclus, gesättigt oder ungesättigt oder aromatisch, gegebenenfalls substituiert oder
  · (iii) einen Heterocyclus, gesättigt oder ungesättigt oder aromatisch, gegebenenfalls substituiert,

- $Z^{31}$ ausgewählt ist aus:

  · einem Wasserstoffatom,
  · einer Gruppe Alkyl, Acyl, Aryl, Alken oder Alkin, gegebenenfalls substituiert,
  · einem Carbocyclus, gesättigt oder ungesättigt, gegebenenfalls substituiert oder aromatisch,
  · einem Heterocyclus, gesättigt oder ungesättigt, gegebenenfalls substituiert,
  · den Gruppen Alkoxycarbonyl oder Aryloxycarbonyl (-COOR), Carboxy (-COOH), Acyloxy ($-O_2CR$), Carbamoyl ($-CONR_2$), Cyano (-CN), Alkylcarbonyl, Alkyarylcarbonyl, Arylcarbonyl, Arylalkylcarbonyl, Phtalimido, Maleimido, Succinimido, Amidino, Guanidimo, Hydroxy (-OH), Amino ($-NR_2$), Halogen, Allyl, Epoxy, Alkoxy (-OR), S-Alkyl, S-Aryl, · Organosilyl, wobei R eine Alkyl- oder Arylgruppe darstellt;
  · Gruppen, die einen hydrophilen oder ionischen Charakter aufweisen, wie die alkalischen Salze von Carbonsäuren, die alkalischen Salze von Sulfonsäuren, die Polyoxyalkylenketten (POE, POP), die kationischen Substituenten (quaternäre Ammoniumsalze)

- $R^{31}$ $Z^{31}$ oder eine Gruppe $SR^{32}$ ist,
- n > 0 bedeutet,
- A eine Polymerkette darstellt, die einen Block mit hydrophilem und einen Block mit hydrophobem Charakter einschließt.

**10.** Latex nach einem der Ansprüche 2 bis 6, wobei das amphiphile wasserlösliche Blockcopolymer der folgenden Formel entspricht

$$S{=}C(Z^{41})\text{-}[C{\equiv}C]_n\text{—}S\text{—}[A]\text{-}R^{41} \qquad \text{(IVp)}$$

wobei in der Formel:

- $R^{41}$ folgendes darstellt:

  (i) eine Gruppe Alkyl, Acyl, Aryl, Alken oder Alkin, gegebenenfalls substituiert, oder
  · (ii) einen Carbocyclus, gesättigt oder ungesättigt, gegebenenfalls substituiert oder aromatisch, oder
  · (iii) einen Heterocyclus, gesättigt oder ungesättigt, gegebenenfalls substituiert oder aromatisch,

- $Z^{41}$ folgendes darstellt:

  · ein Wasserstoffatom,
  · eine Gruppe Alkyl, Acyl, Aryl, Alken oder Alkin, gegebenenfalls substituiert,
  · einen Carbocyclus, gesättigt oder ungesättigt, gegebenenfalls substituiert oder aromatisch,
  · einen Heterocyclus, gesättigt oder ungesättigt, gegebenenfalls substituiert,
  die Gruppen Alkoxycarbonyl oder Aryloxycarbonyl (-COOR), Carboxy (-COOH), Acyloxy ($-O_2CR$), Carbamoyl ($-CONR_2$), Cyano (-CN), Alkylcarbonyl, Alkylarylcarbonyl, Arylcarbonyl, Arylalkylcarbonyl, Phtalimido, Maleimido, Succinimido, Amidino, Guanidimo, Hydroxy (-OH), Amino ($-NR_2$), Halogen, Allyl, Epoxy, Alkoxy (-OR), S-Alkyl, S-Aryl, Organosilyl, wobei R eine Alkyl- oder Arylgruppe darstellt;
  · Gruppen, die einen hydrophilen oder ionischen Charakter aufweisen, wie die alkalischen Salze von Carbonsäuren, die alkalischen Salze von Sulfonsäuren, die Polyoxyalkylenketten (POE, POP), die kationischen Substituenten (quaternäre Ammoniumsalze)

- $R^{31}$ $Z^{31}$ oder eine Gruppe $SR^{32}$ ist,
- n > 0 bedeutet,
- A eine Polymerkette darstellt, die einen Block mit hydrophilem und einen Block mit hydrophobem Charakter einschließt.

**11.** Latex nach einem der Ansprüche 2 bis 6, wobei das wasserlösliche amphiphile Copolymer der folgenden Formel

entspricht:

$$S=C(OR^{51})-S-[A]-R^{52} \qquad (Vp),$$

wobei

- $R^{51}$ folgendes darstellt:

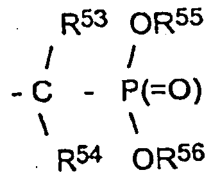

wobei
$R^{53}$, $R^{54}$, gleich oder verschieden, ausgewählt sind aus den Gruppen Halogen, =O, =S, $-NO_2$, $-SO_3R$, NCO, CN, OR, -SR, $-NR_2$, -COOR, $O_2CR$, $-CONR_2$, $-NCOR_2$, wobei R ein Wasserstoffatom oder einen Rest Alkyl, Alkenyl, Alkinyl, Cycloacenyl, Cycloalkinyl, Aryl, gegebenenfalls kondensiert mit einem aromatischen oder nicht aromatischen Heterocyclus, Alkylaryl, Aralkyl, Heteroaryl, darstellt; wobei diese Reste gegebenenfalls mit einem oder mehreren Gruppen, gleich oder verschieden, substituiert sein können, die ausgewählt sind aus Halogenen, =O, =S, OH, Alcoxy, SH, Thioalcoxy, $NH_2$, Mono- oder Dialkylamino, CN, COOH, Ester, Amid, $CF_3$ und/oder gegebenenfalls unterbrochen durch ein oder mehrere Atome, ausgewählt aus O, S, N, P; oder aus einer heterocyclischen Gruppe, gegebenenfalls substituiert mit einer oder mehreren Gruppen, wie zuvor definiert;
oder $R^{53}$ und $R^{54}$ zusammen mit dem Kohlenstoffatom, an das sie gebunden sind, einen Kohlenwasserstoff- oder einen Heterocyclus bilden;

- $R^{53}$, $R^{56}$, gleich oder verschieden, eine Gruppe wie zuvor für R definiert, darstellen; oder zusammen eine $C_2$-$C_4$-Kohlenwasserstoffkette, gegebenenfalls unterbrochen mit einem Heteroatom, ausgewählt aus O, S und N, bilden;
- $R^{52}$ die gleiche Definition wie die für $R^{53}$ gegebene besitzt;
- A eine Polymerkette darstellt, umfassend einen Block mit hydrophilem und einen Block mit hydrophobem Charakter.

**12.** Latex nach einem der vorhergehenden Ansprüche 1 bis 11, wobei das Polymer mit ethylenischer Unsättigung ausgehend von ethylenisch ungesättigten Monomeren erhalten wird, die ausgewählt sind aus:

$$CXdX'd(=CVd- CV'd)_t=CH_2$$

- Xd, X'd, gleich oder verschieden, stellen folgendes dar: H, eine Alkylgruppe oder ein Halogen,
- Vd, V'd, gleich oder verschieden, stellen folgendes dar: H, ein Halogen oder eine Gruppe R, OR, OCOR, NHCOH, OH; $NH_2$, NHR, $N(R)_2$, $(R)_2N^+O^-$, NHCOR, $CO_2H$, $CO_2R$, CN, $CONH_2$, CONHR oder $CONR_2$, wobei R, gleich oder verschieden, ausgewählt ist aus den Gruppen Alkyl, Aryl, Aralkyl, Alkaryl, Alken oder Organosilyl, die gegebenenfalls perfluoriert und gegebenenfalls mit einer oder mehreren Carboxyl-, Epoxy-, Hydroxyl-, Alkoxy-, Amino-, Halogen- oder Sulfongruppen substituiert sind;
- t bedeutet 0 oder 1.

**13.** Latex nach Anspruch 12, **dadurch gekennzeichnet, dass** das oder die ethylenisch ungesättigten Monomere ausgewählt sind aus: Styrol oder seinen Derivaten, Butadien, Chloropren, (Meth)acrylsäureestern und Vinylnitrilen.

**14.** Latex nach einem der vorhergehenden Ansprüche 1 bis 14, wobei das in Wasser unlösliche Polymer eine Tg unter 15 °C aufweist.

**15.** Formulierungen, die für Anwendungen in den Bereichen Papierbeschichtung, Anstrichfarben oder Baumaterialien, die den Latex mit modifizierter Oberflächeneigenschaft nach einem der Ansprüche 1 bis 14 einschließen, bestimmt sind.